Europäisches Patentamt

European Patent Office

Office européen des brevets

(19)

(11) Numéro de publication : **0 127 537**
**B1**

(12)

# FASCICULE DE BREVET EUROPÉEN

(45) Date de publication du fascicule du brevet :
01.10.86

(51) Int. Cl.⁴ : **F 16 B 37/04**

(21) Numéro de dépôt : **84401059.5**

(22) Date de dépôt : **23.05.84**

(54) Ecrou encagé.

(30) Priorité : 31.05.83 FR 8309034

(43) Date de publication de la demande :
05.12.84 Bulletin 84/49

(45) Mention de la délivrance du brevet :
01.10.86 Bulletin 86/40

(84) Etats contractants désignés :
BE DE GB IT NL SE

(56) Documents cités :
CH-A- 265 915
FR-E- 51 236
GB-A- 608 911
US-A- 2 469 312
US-A- 3 646 982

(73) Titulaire : SIMMONDS S.A:
5 rue Michelet
F-92152 Suresnes Cedex (FR)

Société Nationale Industrielle Aérospatiale Société
anonyme dite:
37 Bld de Montmorency
F-75016 Paris (FR)

(72) Inventeur : Martin, Joel
Rond Point de Champaissant
F-72580 Saint Cosme en Vairais (FR)
Inventeur : Boire, Maxime
11 avenue Sainte Marie
F-92370 Chaville (FR)

(74) Mandataire : Durand, Yves Armand Louis et al
Cabinet Z. Weinstein 20, Avenue de Friedland
F-75008 Paris (FR)

Jouve, 18, rue St-Denis, 75001 Paris, France

## Description

La présente invention a essentiellement pour objet un écrou encagé destiné à l'assemblage de matériaux métalliques ou composites revêtant par exemple la forme de plaques ou panneaux constitués par des fibres enrobées d'une résine synthétique ou analogue.

Cet écrou encagé peut se présenter sous forme d'un écrou encagé unitaire, ou bien d'une pluralité d'écrous encagés réunis suivant une bande souple.

On a déjà proposé des écrous encagés réunis suivant une bande comprenant un profilé métallique à section transversale en U et entre les branches duquel sont montés flottants une pluralité d'écrous, comme cela est décrit par exemple dans le document US-A-2 469 312. La bande peut être fixée sur par exemple un panneau que l'on peut ensuite assembler par vissage à un autre panneau par exemple.

Toutefois une telle bande métallique d'écrous encagés ne convient pas pour réaliser l'assemblage de matériaux composites qui actuellement et comme on le sait, tendent à remplacer les matériaux traditionnels utilisés pour réaliser telle ou telle pièce dans l'industrie aéronautique notamment.

En effet, on sait que l'assemblage des matériaux composites demeure délicat et, en toute hypothèse, les opérations de rivetage de tels matériaux sont à proscrire. Par ailleurs, les écrous utilisés pour assembler ces matériaux doivent être tels que toute corrosion galvanique, c'est-à-dire toute apparition d'un potentiel entre les fibres du composite et le métal de l'écrou, soit évitée. Or, ce phénomène apparaît nécessairement avec les écrous encagés connus, ou encore avec les écrous encagés réunis suivant une bande métallique, comme expliqué précédemment.

Par ailleurs, il est connu, d'après le document CH-A-265 915, d'enfermer des pièces diverses telles que des simples écrous, entre deux couches de matière synthétique, afin de renforcer lesdites pièces. Cependant de tels écrous ne possèdent aucune propriété de déformabilité lors du serrage et ne peuvent pas convenir notamment pour l'assemblage de panneaux en matériau composite qui, comme on le sait, est fragile à certains égards et possède une faible résistance mécanique à la compression et au matage.

La présente invention a donc pour but de remédier aux inconvénients ci-dessus en proposant un écrou encagé particulier ou bien une bande de tels écrous encagés qui est souple, légère, peut être fixée sans rivetage, évite toute corrosion galvanique, et permet par conséquent un assemblage sûr et fiable de matériaux composites, et cela sans risque d'abîmer ou d'altérer les qualités intrinsèques du matériau après l'assemblage.

A cet effet, l'invention a pour objet un écrou encagé du type retenu entre deux bandes adhérisées respectivement inférieure et supérieure en un matériau synthétique, tel que par exemple un matériau composite, caractérisé en ce qu'il comprend un écrou élastiquement déformable comportant un canon intérieurement taraudé et raccordé par sa partie supérieure à une jupe extérieure concentrique audit canon, cet écrou étant monté entre les branches d'un support présentant sensiblement la forme d'un U dont la base est prisonnière entre les deux bandes inférieure et supérieure qui peuvent être fixées par simple adhérence sur un élément en matériau composite par exemple.

On pourra ainsi réaliser un seul écrou ou une succession de tels écrous réunis en une bande souple et légère qui pourra être fixée par simple collage par exemple, sur l'élément à assembler.

Selon une autre caractéristique, la bande inférieure comporte des bords longitudinaux parallèles, tandis que la bande supérieure comporte des bords longitudinaux avec des échancrures ou des lumières ménageant un passage pour les branches du support en U.

Ainsi, lors de la compression et du chauffage des deux bandes, la solidarisation de celles-ci pourra avoir lieu sur pratiquement l'entier pourtour de la base du support.

Selon une autre caractéristique, les bandes précitées adhèrent entre elles non seulement sur le pourtour extérieur de la base du support, mais également au niveau d'ouvertures prévues dans cette base.

En d'autres termes, on sera certain que le ou les supports d'écrou seront maintenus fermement emprisonnés entre les deux bandes de matériau composite.

Suivant une autre caractéristique, les deux bandes précitées enserrent une pluralité de supports par leurs bases respectives, ces supports avec leurs écrous associés étant plus ou moins espacés le long des bandes.

L'invention vise encore un assemblage de panneaux ou analogues en matériau composite réalisé à l'aide d'écrous encagés unitaires ou en bande, répondant à l'une ou l'autre des caractéristiques susmentionnées.

Mais d'autres avantages et caractéristiques de l'invention apparaîtront mieux dans la description détaillée qui suit et se réfère aux dessins annexés donnés uniquement à titre d'exemple, et dans lesquels :

La figure 1 est une vue en élévation d'une portion de bande d'écrous encagés conformes à l'invention, l'un de ces écrous étant montré en coupe axiale.

La figure 2 est une vue en bout et en coupe de cette bande suivant la ligne II-II de la figure 1.

La figure 3 est une vue de dessus d'un écrou encagé, suivant la flèche III de la figure 1.

La figure 4 est une vue de dessus montrant plus particulièrement les deux bandes enserrant la base du support d'écrou, suivant un premier mode de réalisation.

La figure 5 illustre, en vue de dessus, un deuxième mode de réalisation des deux bandes précitées.

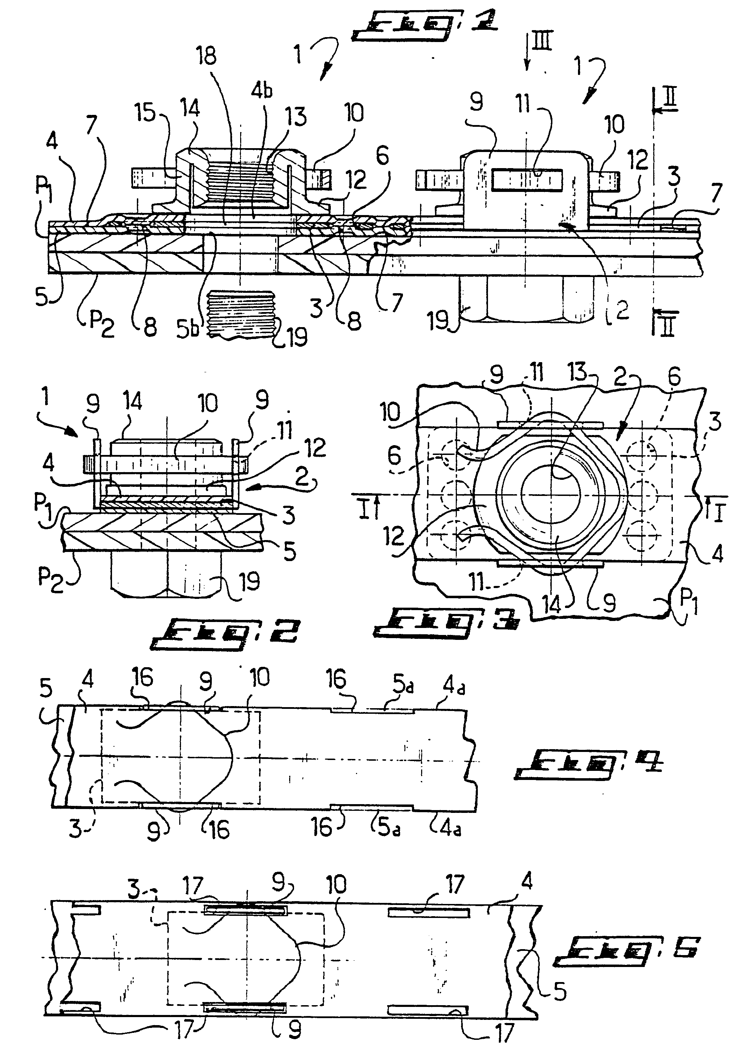

Suivant un exemple de réalisation, et en se reportant aux figures 1 à 3, un écrou encagé conforme aux principes de l'invention, comprend essentiellement un écrou 1 monté dans un support 2 qui présente sensiblement en section transversale la forme d'un U dont la base 3 est prise en sandwich entre une bande supérieure 4 et une bande inférieure 5, ces deux bandes étant, de préférence, toutes les deux en un matériau composite, c'est-à-dire constitué par des fibres de carbone par exemple enrobées d'une résine synthétique.

L'écrou 1 et son support 2 avec les bandes 4 et 5 peuvent être fabriqués d'une façon séparée ou à l'unité, ou bien, ils peuvent être fabriqués de manière à former une bande souple comportant une pluralité d'écrous encagés, comme on le voit bien sur la figure 1 qui montre deux écrous.

Dans ce cas, les bandes supérieure 4 et inférieure 5 enserrent la base 3 des supports successifs contenant chacun un écrou 1.

La base 3 de chaque support 2 comporte de préférence des orifices 6 bien visibles sur la figure 3. Ainsi, après compression, collage ou chauffage des bandes 4 et 5, celles-ci adhéreront l'une à l'autre non seulement au niveau du pourtour extérieur de la base 2, comme on l'a montré en 7 sur la figure 1, mais également au niveau des orifices 6 comme on le voit en 8 sur ladite figure. On comprend donc que, de cette façon, que le ou les supports 2 seront fermement maintenus entre les bandes 4 et 5.

L'écrou proprement dit 1 peut être d'un type quelconque et est monté entre les branches 9 du U du support 2 par l'intermédiaire d'un circlips ou analogue 10. Comme on le voit sur la partie droite de la figure 1, et également sur les figures 2 à 5, le circlips 10 forme une boucle ouverte qui passe dans des lumières 11 ménagées dans les branches 9 de chaque support 2. On comprend donc que l'écrou 1 sera retenu de manière flottante dans son support 2, puisque la face d'appui 12 de cet écrou pourra se débattre dans le sens vertical entre le circlips 10 qui le retient et la bande supérieure 4 qui, avec la bande 5, enserre la base 3 du support en U 2.

Suivant une réalisation préférée, l'écrou 1 est un écrou du type élastiquement déformable et comprend, comme on le voit sur la partie gauche de la figure 1, un canon 13 intérieurement taraudé et raccordé par sa partie supérieure 14 à une jupe extérieure 15 concentrique au canon 13 et dont la partie inférieure constitue précisément la face d'appui 12 de l'écrou 1.

Les bandes 4 et 5 en matériau composite peuvent avoir la même largeur et comporter respectivement des bords longitudinaux parallèles. Autrement dit, comme on le voit sur la figure 2, la bande inférieure 5 présente une largeur sensiblement identique à celle de la bande supérieure 4 qui passe entre les branches 9 du support 2.

Suivant un autre mode de réalisation visible sur la figure 4, la bande inférieure 5 comporte des bords longitudinaux 5a parallèles, tandis que la branche supérieure 4 comporte des bords longitudinaux 4a avec des échancrures 16 dans lesquelles passent les branches 9 du support 2.

Suivant le mode de réalisation illustré par la figure 5, la bande supérieure 4 comporte des orifices ou lumières 17 ménageant un passage pour les branches 9 que l'on enfile au travers desdites lumières. Ce mode de réalisation, ainsi d'ailleurs que celui de la figure 4, présente l'avantage de permettre aux bandes 4 et 5 de déborder latéralement, au-delà de la base de chaque support 2. Ainsi, les bandes 4 et 5 pourront être solidarisées non seulement au niveau des orifices 6 et des extrémités de la base 2, mais également sur les côtés de cette base qui sera totalement prisonnière ou enfermée entre les deux bandes en matériau composite 4 et 5.

Bien entendu, on prévoira dans les bandes 4 et 5 des orifices montrés respectivement en 4b et 5b sur la figure 1, et qui sont sensiblement en correspondance avec l'orifice central 18 prévu dans la base 3 du support 2 et servant au passage de la vis 19.

On décrira maintenant la fabrication d'un écrou encagé conforme à l'invention ainsi que la manière selon laquelle on réalise un assemblage avec un tel écrou.

On dispose tout d'abord sur une table par exemple, une bande mince en matériau composite percée de trous, de préférence légèrement plus grands que celui de l'écrou 1, ladite bande constituant la bande inférieure 5 précédemment mentionnée.

Sur cette bande 5 on place une pluralité de supports 2 suivant des intervalles appropriés.

Puis sur la base 3 du support 2 on applique une deuxième bande en matériau composite, cette bande constituant précisément la bande supérieure 4 et étant, comme la bande inférieure 5, percée de trous 4b d'une dimension un peu plus grande que l'orifice taraudé de l'écrou 1.

A ce stade, on comprime les bandes 4 et 5 et on effectue une cuisson de sorte que les deux bandes se collent à l'extérieur du pourtour de la base 3 du support 2. On insistera ici sur le fait que la base 3 du support 2 sera immobilisée entre les deux bandes 4 et 5, par le fait qu'elles se solidarisent aussi au niveau des orifices 6 prévus dans ladite base.

Ensuite, on met en place l'écrou 1 à l'aide du circlips 10 entre les branches 9 du support 2. L'écrou 1 est ainsi maintenu flottant sur le support 2, comme on l'a expliqué précédemment.

La bande d'écrous encagés étant ainsi réalisée, on procède de la façon suivante pour assembler par exemple deux panneaux $P_1$ et $P_2$ en un matériau composite.

La bande d'écrous encagés est fixée, par collage par exemple, sur le panneau $P_1$. On insistera ici sur le fait qu'étant donné la souplesse de la bande, elle adhérera aisément sur un panneau présentant des lignes de courbure quelconques.

Ceci étant fait, il suffira d'appliquer le panneau P₂ sur le panneau P₁, et d'effectuer le vissage à l'aide des vis 19 pour réaliser l'assemblage.

On dira encore ici que, en fonction de l'assemblage que l'on désire faire, on peut aisément sectionner la bande d'écrous.de façon à utiliser un nombre déterminé de ces écrous, ou même des écrous unitaires. Egalement, non seulement les écrous encagés peuvent être fabriqués en bande comme on l'a décrit précédemment, mais ils pourraient tout aussi bien être fabriqués à l'unité en utilisant des bandes 4 et 5 en matériau composite de petite longueur.

L'invention permet donc de réaliser l'assemblage de pièces en matériau composite à l'aide d'écrous encagés unitaires ou en bande souple, et qui suppriment toutes les opérations de rivetage ainsi que tous les phénomènes de corrosion galvanique, par le fait que le support de l'écrou est complètement isolé des pièces à assembler.

**Revendications**

1. Ecrou encagé du type retenu entre deux bandes adhérisées respectivement inférieure (5) et supérieure (4) en un matériau synthétique, tel que par exemple, un matériau composite, caractérisé en ce qu'il comprend un écrou élastiquement déformable (1) comportant un canon (13) intérieurement taraudé et raccordé par sa partie supérieure (14) à une jupe extérieure (15) concentrique audit canon, cet écrou étant monté entre les branches (9) d'un support (2) présentant sensiblement la forme d'un U dont la base (3) est prisonnière entre les deux bandes inférieure (5) et supérieure (4) qui peuvent être fixées par simple adhérence sur un élément (P₁) en matériau composite par exemple.

2. Ecrou encagé selon la revendication 1, caractérisé en ce que la bande inférieure (5) comporte des bords longitudinaux (5a) parallèles, tandis que la bande supérieure (4) comporte des bords longitudinaux (4a) avec des échancrures (16) ou des lumières (17) ménageant un passage pour les branches (9) du support en U (2).

3. Ecrou encagé selon la revendication 1 ou 2, caractérisé en ce que les bandes précitées (4, 5) adhèrent entre elles non seulement sur le pourtour extérieur de la base (3) du support (2), mais également au niveau d'ouverture (6) prévues dans cette base.

4. Ecrou encagé selon l'une des revendications 1 à 3, caractérisé en ce que les deux bandes précitées (4, 5) enserrent une pluralité de supports (2) par leurs bases respectives (3), ces supports (2) avec leurs écrous associés (1) étant plus ou moins espacés le long des bandes.

5. Assemblage de panneaux en matériau composite réalisé à l'aide d'écrous encagés unitaires ou en bande selon l'une quelconque des revendications 1 à 4.

**Claims**

1. Caged nut of the type retained between two lower and upper bondable strips (5) and (4), respectively, from a synthetic material such for instance as a composite material, characterized in that it comprises a resiliently deformable nut (1) comprising a barrel (13) interiorly tapped and connected with its top portion (14) to an outer skirt (15) concentric with the said barrel, this nut being mounted between the legs (9) of a holder (2) exhibiting substantially the shape of a U the base (3) of which is entrapped between both lower and upper strips (5) and (4) which may be fastened through simple adherence onto an element (P₁) from composite material for instance.

2. Caget nut according to claim 1, characterized in that the lower strip (5) comprises parallel longitudinal edges (5a) whereas the upper strip (4) comprises longitudinal edges (4a) with notches (16) or slots (17) providing a passage-way for the legs (9) of the U-shaped holder (2).

3. Caged nut according to claim 1 or 2, characterized in that the aforesaid strips (4, 5) are adhering to each other not only on the outer periphery of the base (3) of the holder (2) but also at the openings (6) provided in this base.

4. Caged nut according to one of claims 1 to 3, characterized in that both aforesaid strips (4, 5) enclose a plurality of holders (2) with their respective bases (3), these holders (2) together with their associated nuts (1) being more or less spaced along the strips.

5. Assembly of panels from composite material carried out with the assistance of unitary or stripwise arranged caged nuts according to any one of claims 1 to 4.

**Patentansprüche**

1. In einem Käfig gehalterte Mutter derjenigen Gattung bei welcher sie zwischen zwei jeweils untere und oberen anhaftbaren Streifen (5) und (4) aus einem Kunststoff wie z. B. einem Verbundstoff, zurückgehalten wird, dadurch gekennzeichnet, dass sie eine elastisch verformbare Mutter (1) umfasst mit einer mit einem Innengewinde versehenen Hülse (13), die über ihren oberen Teil (14) mit einem zu der besagten Hülse konzentrischen äusseren Mantel (15) verbunden ist, wobei dieser Mutter zwischen den Schenkeln (9) eines Halters (2) andgeordnet ist, der im wesentlichen die Gestalt eine U's aufweist, dessen Basis (3) zwischen den beiden unteren und oberen Streifen (5) und (4) eingefangen ist, welche durch einfaches Haften an einem Element (P₁) z. B. aus Verbundverkstoff befestigt werden können.

2. In einem Käfig gehalterte Mutter nach Anspruch 1, dadurch gekennzeichnet, dass der untere Streifen (5) parallele Längsränder (5a) umfasst, während der obere Streifen (4) Längsränder (4a) mit einem Durchgang für die Schenkel (9) des U-förmigen Halters (2) gewährleistenden Ausparungen (16) oder Schlitzlöchern (17) aufweist.

3. In einem Käfig gehalterte Mutter nach Anspruch 1 oder 2, dadurch gekennzeichnet, dass die vorgenannten Streifen (4, 5) nicht nur an dem Aussenumfang der Basis (3) des Halters (2) sondern auch an den in dieser Basis vorgesehenen Öffnungen (6) aneinander haften.

4. In einem Käfig gehalterte Mutter nach einem der Ansprüche 1 bis 3, dadurch gekennzeichnet, dass die beiden vorgenannten Streifen (4, 5) eine Vielzahl von Haltern (2) über deren jeweiligen Basis (3) zwischen sich einschliessen, wobei diese Halter (2) mit ihren zugeordneten Muttern (1) entlang der Streifen mehr oder weniger voneinander entfernt sind.

5. Mit Hilfe von im Käfig gehalterten einzelnen oder streifenweise angeordneten Muttern nach irgendeinem der Ansprüche 1 bis 4 durchgeführte Zusammenfügung von Platten aus Verbundwerkstoff.

Fig. 1

Fig. 2

Fig. 3

Fig. 4

Fig. 6